# EUROPEAN PATENT SPECIFICATION

(11) **EP 2 706 812 B1**
(45) Date of publication and mention of the grant of the patent: **30.05.2018**
(21) Application number: 12844170.6
(22) Date of filing: 27.10.2012
(51) Int. Cl.: H04W 48/16

(54) **METHOD AND TERMINAL FOR AUTOMATICALLY ACCESSING WI-FI NETWORK**
VERFAHREN UND ENDGERÄT FÜR DEN AUTOMATISCHEN ZUGRIFF AUF EIN WIFI-NETZWERK
PROCÉDÉ ET TERMINAL POUR ACCÉDER AUTOMATIQUEMENT À UN RÉSEAU WI-FI

(30) Priority: 29.10.2011 CN 201110335527
(43) Date of publication of application: 12.03.2014
(73) Proprietor: Huawei Device (Dongguan) Co., Ltd., Dongguan, Guangdong 523808 (CN)
(72) Inventor: WANG, Jie, Shenzhen Guangdong 518129 (CN)
(74) Representative: Gill Jennings & Every LLP
(86) International application number: PCT/CN2012/083634
(87) International publication number: WO 2013/060294

(56) References cited:
- WO-A2-2011/087267
- CN-A- 102 448 187
- JP-A- 2011 061 713
- US-A1- 2009 258 668
- US-A1- 2010 103 844

## Description

### TECHNICAL FIELD

The present invention relates to wireless access technologies, and in particular, to a method for automatically accessing a Wi-Fi network and a terminal.

### BACKGROUND

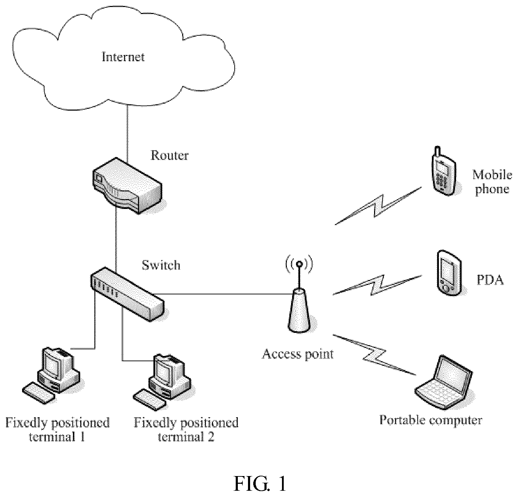

A Wi-Fi (Wireless Fidelity) access technology is a technology for wirelessly connecting terminals, such as a personal computer (PC) and handheld devices (such as a PDA (Personal Digital Assistant) and a mobile phone, to a network. In an architecture in which a network is assessed through Wi-Fi, as shown in FIG. 1, a fixed terminal can access the Internet through a router and a switch, but mobile terminals, such as a mobile phone, a PDA, a Tablet (tablet computer), and a portable computer, wirelessly access the Internet through an AP (Access Point).

It can be seen from the architecture in which the network is assessed through the Wi-Fi that a Wi-Fi wireless access system provides a wireless access service through access points, but disposition of the access points is not continuous, so that coverage of Wi-Fi signal access is geographically discontinuous. A mobile terminal has mobility. In some places, there is an access point, and therefore the mobile terminal can perform Wi-Fi wireless access, but in some places, there is no access point, and therefore access cannot be provided. Document US2009/258668 A1 discloses a method for location discovery in dual-mode phones. As a dual-mode phone moves within an enterprise Wi-Fi network, when the associated cell tower information changes, the phone reports this information to a mobility controller of the enterprise, the mobility controller collects this information and develops a list associating cell tower information with enterprise Wi-Fi availability. If the newly associated cell tower information is associated with enterprise Wi-Fi access, a Wi-Fi radio of the phone is switched to a more aggressive scanning state, scanning for Wi-Fi access nodes. Document WO2011/087267 A2 discloses a method for automatically connecting a short range wireless network. When at least one of the distances to a pre-registered APs falls below a threshold distance, a terminal turns on the WLAN module and searches for the AP by determining an AP search cycle. It further discloses that When the MAC address of the searched AP and the pre-stored MAC address of the AP are identical, the terminal performs the connection to the searched AP.

For setting of a Wi-Fi function of a mobile terminal, the Wi-Fi function may be set to an enabled state, and in this state, the mobile terminal regularly searches for an access point, and in this way, even in a region where no access point exists, the mobile terminal also performs searching continuously, which increases power consumption of the terminal; and the Wi-Fi function may also be set to a disabled state, and in this way, even if the mobile terminal enters a region where an access point exists, a user needs to re-set the Wi-Fi function to be enabled, and otherwise, only a 2G/3G mobile network access manner can be adopted. However, compared with the Wi-Fi wireless access manner, the 2G/3G mobile network access manner has features of higher cost and lower rate, which not only increases a communication cost of the user but also cannot reduce pressure on service traffic of the 2G/3G mobile network of an operator.

### SUMMARY

Based on the foregoing existing problem, embodiments of the present invention provide a method for automatically accessing a Wi-Fi network and a terminal, so that a terminal can automatically switch to a Wi-Fi access network.

In one aspect, the present invention provides a method for automatically accessing a Wi-Fi network, and the method includes: obtaining, by a terminal, a current mobile network location identifier of the terminal; determining, by the terminal, whether the current mobile network location identifier of the terminal is stored in a Wi-Fi access location list, where the Wi-Fi access location list is used to store a related identifier corresponding to a region that provides Wi-Fi wireless signal access; wherein the related identifier comprises mobile network location identifiers of the terminal and the corresponding Wi-Fi SSIDs; when the terminal determines that the current mobile network location identifier of the terminal is stored in the Wi-Fi access location list, making a Wi-Fi access module be in an enabled state, and starting a Wi-Fi network connection process according to a Wi-Fi SSID corresponding to the mobile network location identifier of the terminal only after a screen of the terminal is turned on or a data service is requested by a user.

In another aspect, a terminal for automatically accessing a Wi-Fi network is provided, and the terminal includes: a location identifier obtaining module, configured to obtain a current mobile network location identifier of the terminal; a determining module, configured to determine whether the current mobile network location identifier of the terminal is stored in a Wi-Fi access location list, where the Wi-Fi access location list is used to store a related identifier corresponding to a region that provides Wi-Fi wireless signal access; wherein the related identifier comprises mobile network location identifiers of the terminal and the corresponding Wi-Fi SSIDs, and the terminal further includes an executing module, configured to, when the determining terminal determines that the current mobile network location identifier of the terminal is stored in the Wi-Fi access location list, make a Wi-Fi access module be in an enabled state, and start a Wi-Fi network connection process according to a Wi-Fi SSID corresponding to the mobile network location identifier of the terminal only after a screen of the terminal is turned on or a data service is requested by a user.

It can be seen from the foregoing technical solutions that, with the method for automatically accessing a Wi-Fi network and the terminal provided in the embodiments of the present invention, wide region coverage of a mobile network can be used to automatically perform Wi-Fi signal access according to information stored in a Wi-Fi access location list, thereby better solving a problem of inconvenient terminal Wi-Fi working state control caused by discontinuous coverage of a Wi-Fi access point.

### BRIEF DESCRIPTION OF DRAWINGS

To describe the technical solutions in the embodiments of the present invention or in the prior art more clearly, the accompanying drawings required for describing the embodiments or the prior art are introduced briefly in the following. Apparently, the accompanying drawings in the following description show only some embodiments of the present invention, and persons of ordinary skill in the art may also derive other drawings from these accompanying drawings without creative efforts.
FIG. 1 is a schematic architectural diagram of a Wi-Fi access system in the prior art;
FIG. 2 is a schematic flow chart of a method for automatically accessing a Wi-Fi network according to an embodiment of the present invention;
FIG. 3 is a schematic flow chart of a Wi-Fi access location list creation method according to an embodiment of the present invention;
FIG. 4 is a schematic structural diagram of a terminal according to the present invention; and
FIG. 5 is a schematic structural diagram of a Wi-Fi access location list creation module according to an embodiment of the present invention.

### DESCRIPTION OF EMBODIMENTS

In order to make the objectives, technical solutions, and advantages of the present invention more comprehensible, the technical solutions in the embodiments of the present invention are clearly and described in the following with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

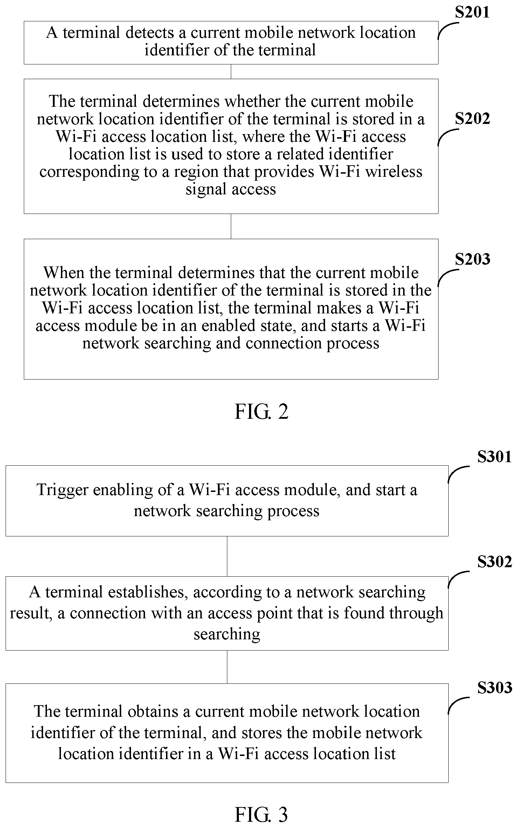

Referring to FIG. 2, a method embodiment provided in the present invention includes the following process.

S201: A terminal obtains a current mobile network location identifier of the terminal.

In a specific implementation process, for the mobile network location identifier, a cell identifier of a mobile network may be obtained in the following manner: The terminal may obtain, according to a cell broadcast message delivered by a mobile network, a cell identifier of the mobile network where the terminal is located.

S202: The terminal determines whether the current mobile network location identifier of the terminal is stored in a Wi-Fi access location list, where the Wi-Fi access location list is used to store a related identifier corresponding to a region that provides Wi-Fi wireless signal access.

The related identifier corresponding to the region that provides Wi-Fi wireless signal access is a logical identifier. In a mobile network, for example, for GSM (Global System For Mobile Communication) and WCDMA (Wideband Code Division Multiple Access) networks, the related identifier is a Cell ID; and for a CDMA (Code Division Multiple Access) network, the related identifier is an SID (System Identifier) and an NID (Network Identifier). It is understandable that, with development of network technologies, other identifiers may also be used for indication, which is not limited in the embodiment of the present invention.

Optionally, after the terminal obtains the current mobile network location identifier of the terminal, the terminal first determines, through comparison, whether the current mobile network location identifier and a previously stored mobile network location identifier are the same, and when a comparison result is that the two are not the same, the terminal determines whether the current mobile network location identifier is stored in the Wi-Fi access location list.

By adopting the foregoing manner, the terminal compares the current mobile network location identifier and the previously stored mobile network location identifier, and only when the two are not the same, the terminal determines whether the mobile network location identifier is stored in the Wi-Fi access location list, which prevents the terminal from continuously determining whether the mobile network location identifier is stored in the Wi-Fi access location list, thereby avoiding waste of a resource.

S203: When the terminal determines that the current mobile network location identifier of the terminal is stored in the Wi-Fi access location list, the terminal makes a Wi-Fi access module be in an enabled state, and starts a Wi-Fi network searching and connection process.

By adopting the foregoing embodiment, the terminal automatically enables the Wi-Fi access module only when detecting that the current mobile network location identifier of the terminal is in the Wi-Fi access location list. In this way, wide region coverage of the mobile network can be used to automatically perform Wi-Fi signal access according to information stored in the Wi-Fi access location list, thereby better solving a problem of inconvenient terminal Wi-Fi working state control caused by discontinuous coverage of a Wi-Fi access point.

In the foregoing method embodiment, the mobile network location identifier may specifically be a cell identifier of a mobile network, and the terminal obtains, according to a cell broadcast message delivered by a mobile network, a cell identifier of the mobile network where the terminal is located.

Optionally, the Wi-Fi access location list may further store, in advance, a Wi-Fi SSID (service set identifier) corresponding to an access point in a region that is indicated by the mobile network location identifier; and when the terminal starts a Wi-Fi network searching and connection process, the terminal may start the Wi-Fi network searching and connection process through the Wi-Fi SSID corresponding to the access point in the region where the terminal is located.

The Wi-Fi access location list stores the Wi-Fi service set identifier corresponding to the access point in the region that is indicated by the mobile network location identifier, so that when the terminal performs Wi-Fi network searching and connection, the terminal can perform a network searching and access point connection process more quickly according to these Wi-Fi SSIDs.

In a specific implementation process, in Wi-Fi settings of terminal software, in addition to original Enable and Disable, an "Automatic" option may be added. When the terminal is powered on, or when it is determined, according to the cell broadcast message delivered by the mobile network, that the mobile network location identifier of the terminal (for GSM and WCDMA (networks, the cell identifier is a Cell ID; and for a CDMA network, the cell identifier is an SID and an NID) changes, the Wi-Fi access location list is searched according to the current mobile network location identifier of the terminal. If the current mobile network location identifier is stored in the list, the terminal automatically enables a Wi-Fi function, and performs normal procedures such as Wi-Fi network searching and network connection; and otherwise, the Wi-Fi access module is disabled. The foregoing process is automatically completed by the terminal, and user intervention is not required.

If the Wi-Fi access location list records information of Wi-Fi SSIDs corresponding to the mobile network location identifier, the terminal preferentially searches for these Wi-Fi SSIDs during network searching, and performs a connection process.

When the terminal enters a geographical region where a Wi-Fi signal possibly exists, in many cases, a user does not perform a data service, in consideration of power saving of the terminal, the terminal may start a process of automatically accessing a Wi-Fi network to perform procedures of Wi-Fi searching and connection only after a screen of the terminal is turned on or the user initiates a data service request.

In addition, the present invention further provides a Wi-Fi access location list creation method embodiment, which includes:
S301: Trigger enabling of a Wi-Fi access module, and start a network searching process.

The triggering may be performed manually, and may also be automatically performed by a terminal.

S302: The terminal establishes, according to a network searching result, a connection with an access point that is found through searching.

Wi-Fi access point information is obtained according to the network searching result. A user or the terminal may automatically establish, according to the information, a connection with the access point that is found through searching.

S303: The terminal obtains a current mobile network location identifier of the terminal, and stores the mobile network location identifier in a Wi-Fi access location list.

Optionally, the mobile network location identifier is a cell identifier of a mobile network where the terminal is located. The storing the current mobile network location identifier of the terminal in the Wi-Fi access location list specifically is: storing the cell identifier of the mobile network where the terminal is located in the Wi-Fi access location list.

Optionally, the terminal may further obtain a Wi-Fi SSID corresponding to a current access point of the terminal.

The terminal stores the obtained Wi-Fi SSID in a record that corresponds to the mobile network location identifier in the Wi-Fi access location list.

In a specific implementation process, when the mobile terminal accesses a certain Wi-Fi hot spot for the first time, a Wi-Fi function needs to be enabled in an existing manner. For example, the user actively performs setting on the terminal to enable the Wi-Fi function, or the Wi-Fi function of the terminal is enabled by default. The terminal searches for a Wi-Fi network, and after successfully establishing a connection with a Wi-Fi AP, the mobile terminal reads location information of the current mobile network at the same time, which specifically refers to: a Cell ID (a cell identifier) of GSM and WCDMA networks and a system identifier SID and a network identifier NID of a CDMA network. Then, in a Wi-Fi access location list, a new record is added, and the mobile network location identifier and a Wi-Fi SSID are saved. This process may be automatically completed by the terminal, and user intervention is not required. Alternatively, the terminal may provide corresponding prompt information (for example: whether the Wi-Fi information needs to be saved, and connection may be automatically performed subsequently), and enable the user to actively choose whether to save the record. If the user is enabled to choose whether to save the record, the terminal needs to first check whether the Wi-Fi access location list has a corresponding record, and needs to prompt information to the user only for a new record.

A location coverage of the mobile network is usually much larger than a geographical coverage of a certain Wi-Fi AP, and therefore, it is likely that one mobile network location identifier corresponds to multiple Wi-Fi SSIDs.

For example, the Wi-Fi access location list may adopt the following manner:

| Sequence Number | Mobile Network Location Identifier | Wi-Fi SSID (optional) |
|---|---|---|
| 1 | Cell ID 1 | SSID 1, SSID 2, SSID 3 |
| 2 | Cell ID 2 | SSID 4, SSID 5 |
| 3 | Cell ID 3 | SSID 6 |
| ...... | ...... | ...... |

Optionally, when at least two access points are found through searching, the storing the obtained Wi-Fi service set identifier corresponding to the access point in a record that corresponds to the mobile network location identifier in the Wi-Fi access location list includes:
establishing, by the terminal, a connection with a certain access point among the at least two access points; and
after the connection succeeds, obtaining, by the terminal, a Wi-Fi service set identifier corresponding to the certain access point, storing the service set identifier in the record that corresponds to the mobile network location identifier in the Wi-Fi access location list, and then starting a connection process of another access point.

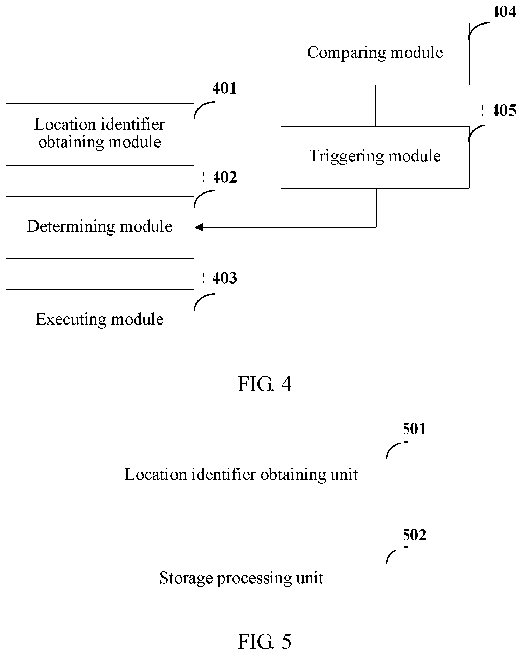

Figure 4 provides a terminal, where the terminal includes:
a location identifier obtaining module 401, configured to obtain a current mobile network location identifier of the terminal;
a determining module 402, configured to determine whether the current mobile network location identifier of the terminal is stored in a Wi-Fi access location list, where the Wi-Fi access location list is used to store a related identifier corresponding to a region that provides Wi-Fi wireless signal access; and
an executing module 403, configured to, when the determining module 402 determines that the current mobile network location identifier of the terminal is stored in the Wi-Fi access location list, make a Wi-Fi access module be in an enabled state, and start a Wi-Fi network searching and connection process.

Optionally, the terminal may further include:
a comparing module 404, configured to determine, through comparison, whether the current mobile network location identifier and a previously stored mobile network location identifier are the same; and
a triggering module 405, configured to, when a comparison result of the comparing module 404 is that the two are not the same, trigger the determining module 402 to determine whether the current mobile network location identifier is stored in the Wi-Fi access location list.

Optionally, the mobile network location identifier specifically is: a cell identifier of a mobile network.

The location identifier obtaining module 401 is specifically configured to obtain, according to a cell broadcast message delivered by a mobile network, a cell identifier of the mobile network where the terminal is located.

Optionally, the Wi-Fi access location list is further used to store a Wi-Fi service set identifier corresponding to an access point in a region that is indicated by the mobile network location identifier.

The executing module 403 is specifically configured to, when it is determined that the current mobile network location identifier of the terminal is stored in the Wi-Fi access location list, start a Wi-Fi connection process according to a service set identifier of a Wi-Fi network where the terminal is located.

Figure 5 provides a Wi-Fi access location list creation module, where the module includes:
a location identifier obtaining unit 501, configured to trigger enabling of a Wi-Fi access module, start a network searching process, and after establishing a connection with an access point that is found through searching, obtain a current mobile network location identifier of a terminal; and
a storage processing unit 502, configured to store the mobile network location identifier in a Wi-Fi access location list.

The mobile network location identifier is a cell identifier of a mobile network where the terminal is located.

The storage processing unit 502 is specifically configured to store the cell identifier of the mobile network where the terminal is located in the Wi-Fi access location list.

Optionally, the location identifier obtaining unit is further configured to obtain a service set identifier of a Wi-Fi network corresponding to a current access point of the terminal.

The storage processing unit 502 is further specifically configured to store the service set identifier of the Wi-Fi network in a record that corresponds to the mobile network location identifier in the Wi-Fi access location list.

Persons of ordinary skill in the art may understand that, all or a part of procedures in the foregoing method embodiments may be accomplished by a computer program instructing relevant hardware. The program may be stored in a computer-readable storage medium. When the program is executed, the procedures of the foregoing method embodiments may be performed. The storage medium may be a magnetic disk, an optical disk, a read-only memory (ROM), or a random access memory (RAM).

Finally, it should be noted that the foregoing embodiments are only provided for describing the technical solutions of the present invention, but are not intended to limit the present invention. It should be understood by persons of ordinary skill in the art that although the present invention has been described in detail with reference to the foregoing embodiments, they may still make modifications to the technical solutions described in the foregoing embodiments, as long as such modifications or replacements do not depart from the scope of the present invention.

## Claims

1. A method for automatically accessing a Wi-Fi network, comprising:
obtaining (S201), by a terminal, a current mobile network location identifier of the terminal;
determining (S202), by the terminal, whether the current mobile network location identifier of the terminal is stored in a Wi-Fi access location list, wherein the Wi-Fi access location list is used to store a related identifier corresponding to a region that provides Wi-Fi wireless signal access;
**characterized in that**, the related identifier comprises mobile network location identifiers of the terminal and the corresponding Wi-Fi SSIDs, when the terminal determines that the current mobile network location identifier of the terminal is stored in the Wi-Fi access location list, making a Wi-Fi access module be in an enabled state, and starting a Wi-Fi network connection process (S203) according to a Wi-Fi SSID corresponding to the mobile network location identifier of the terminal only after a screen of the terminal is turned on or a data service is requested by a user.

2. The method according to claim 1, wherein after the obtaining, by the terminal, the current mobile network location identifier of the terminal, the method further comprises:
determining, by the terminal through comparison, whether the current mobile network location identifier and a previously stored mobile network location identifier are the same; and
the determining, by the terminal, whether the current mobile network location identifier of the terminal is stored in the Wi-Fi access location list specifically comprises:
when a comparison result of the current mobile network location identifier and the previously stored mobile network location identifier is negative, determining, by the terminal, whether the current mobile network location identifier is stored in the Wi-Fi access location list.

3. The method according to claim 1 or 2, wherein the mobile network location identifier specifically is: a cell identifier of a mobile network; and
the obtaining, by the terminal, the current mobile network location identifier of the terminal specifically comprises:
obtaining, by the terminal according to a cell broadcast message delivered by a mobile network, a cell identifier of the mobile network where the terminal is located.

4. A terminal for automatically accessing a Wi-Fi network, comprising:
a location identifier obtaining module (401), configured to obtain a current mobile network location identifier of the terminal;
a determining module (402), configured to determine whether the current mobile network location identifier of the terminal is stored in a Wi-Fi access location list, wherein the Wi-Fi access location list is used to store a related identifier corresponding to a region that provides Wi-Fi wireless signal access;
**characterized in that**, the related identifier comprises mobile network location identifiers of the terminal and the corresponding Wi-Fi SSIDs, and the terminal further comprises an executing module (403), configured to, when the determining module (402) determines that the current mobile network location identifier of the terminal is stored in the Wi-Fi access location list, make a Wi-Fi access module be in an enabled state, and start a Wi-Fi network connection process according to a Wi-Fi SSID corresponding to the mobile network location identifier of the terminal only after a screen of the terminal is turned on or a data service is requested by a user.

5. The terminal according to claim 4, further comprising:
a comparing module (404), configured to determine, through comparison, whether the current mobile network location identifier and a previously stored mobile network location identifier are the same; and
a triggering module (405), configured to, when a comparison result of the comparing module (404) is that the two are not the same, trigger the determining module (402) to determine whether the current mobile network location identifier is stored in the Wi-Fi access location list.

6. The terminal according to claim 5, wherein the mobile network location identifier specifically is: a cell identifier of a mobile network; and
the location identifier obtaining module (401) is specifically configured to obtain, according to a cell broadcast message delivered by a mobile network, a cell identifier of the mobile network where the terminal is located.

7. The terminal according to claim 6, wherein the Wi-Fi access location list is further used to store a Wi-Fi service set identifier corresponding to an access point in a region that is indicated by the cell identifier of the mobile network; and
the executing module (403) is specifically configured to, when it is determined that the current mobile network location identifier of the terminal is stored in the Wi-Fi access location list, start a Wi-Fi connection process according to the Wi-Fi service set identifier that corresponds to the access point.

## Patentansprüche

1. Verfahren für den automatischen Zugriff auf ein Wi-Fi-Netzwerk, das Folgendes umfasst:
Erhalten (S201), durch ein Endgerät, eines aktuellen Mobilnetz-Standortidentifikators des Endgerätes;
Bestimmen (S202), durch das Endgerät, ob der aktuelle Mobilnetz-Standortidentifikator des Endgerätes in einer Wi-Fi-Zugriffsstandortliste gespeichert ist, wobei die Wi-Fi-Zugriffsstandortliste verwendet wird, um einen zugehörigen Identifikator zu speichern, der einer Region entspricht, die drahtlosen Wi-Fi-Signalzugriff bereitstellt;
**dadurch gekennzeichnet, dass** der zugehörige Identifikator Mobilnetz-Standortidentifikatoren des Endgerätes und die entsprechenden Wi-Fi-SSIDs umfasst, wenn das Endgerät bestimmt, dass der aktuelle Mobilnetz-Standortidentifikator des Endgerätes in der Wi-Fi-Zugriffsstandortliste gespeichert ist, Schalten eines Wi-Fi-Zugriffsmoduls in einen aktivierten Zustand, und Starten eines Wi-Fi-Netzwerk-Verbindungsprozesses (S203) gemäß einer Wi-Fi-SSID, die dem Mobilnetz-Standortidentifikator des Endgerätes entspricht, erst nachdem ein Bildschirm des Endgerätes eingeschaltet wird oder ein Datendienst durch einen Benutzer angefordert wird.

2. Verfahren nach Anspruch 1, wobei, nach dem Erhalten, durch das Endgerät, des aktuellen Mobilnetz-Standortidentifikators des Endgerätes, das Verfahren ferner Folgendes umfasst:
Bestimmen, durch das Endgerät, durch einen Vergleich, ob der aktuelle Mobilnetz-Standortidentifikator und ein zuvor gespeicherter Mobilnetz-Standortidentifikator der gleiche sind; und
das Bestimmen, durch das Endgerät, ob der aktuelle Mobilnetz-Standortidentifikator des Endgerätes in der Wi-Fi-Zugriffsstandortliste gespeichert ist, spezifisch Folgendes umfasst:
wenn ein Vergleichsergebnis des aktuellen Mobilnetz-Standortidentifikators und des zuvor gespeicherten Mobilnetz-Standortidentifikators negativ ist, Bestimmen, durch das Endgerät, ob der aktuelle Mobilnetz-Standortidentifikator in der Wi-Fi-Zugriffsstandortliste gespeichert ist.

3. Verfahren nach Anspruch 1 oder 2, wobei der Mobilnetz-Standortidentifikator spezifisch Folgendes ist: ein Zellenidentifikator eines Mobilnetzes; und
das Erhalten, durch das Endgerät, des aktuellen Mobilnetz-Standortidentifikators des Endgerätes spezifisch Folgendes umfasst:
Erhalten, durch das Endgerät, gemäß einer Zellübertragungsnachricht, die durch ein Mobilnetz bereitgestellt wird, eines Zellenidentifikators des Mobilnetzes, in welchem sich das Endgerät befindet.

4. Endgerät für den automatischen Zugriff auf ein Wi-Fi-Netzwerk, das Folgendes umfasst:
ein Standortidentifikator-Erhaltmodul (401), das zum Erhalten eines aktuellen Mobilnetz-Standortidentifikators des Endgerätes konfiguriert ist;
ein Bestimmungsmodul (402), das zum Bestimmen, ob der aktuelle Mobilnetz-Standortidentifikator des Endgerätes in einer Wi-Fi-Zugriffsstandortliste gespeichert ist, konfiguriert ist, wobei die Wi-Fi-Zugriffsstandortliste verwendet wird, um einen zugehörigen Identifikator zu speichern, der einer Region entspricht, die drahtlosen Wi-Fi-Signalzugriff bereitstellt;
**dadurch gekennzeichnet, dass** der zugehörige Identifikator Mobilnetz-Standortidentifikatoren des Endgerätes und die entsprechenden Wi-Fi-SSIDs umfasst, und das Endgerät ferner ein Ausführungsmodul (403) umfasst, das, wenn das Bestimmungsmodul (402) bestimmt, dass der aktuelle Mobilnetz-Standortidentifikator des Endgerätes in der Wi-Fi-Zugriffsstandortliste gespeichert ist, zum Schalten eines Wi-Fi-Zugriffsmoduls in einen aktivierten Zustand, und zum Starten eines Wi-Fi-Netzwerk-Verbindungsprozesses gemäß einer Wi-Fi-SSID, die dem Mobilnetz-Standortidentifikator des Endgerätes entspricht, erst nachdem ein Bildschirm des Endgerätes eingeschaltet wird oder ein Datendienst durch einen Benutzer angefordert wird, konfiguriert ist.

5. Endgerät nach Anspruch 4, das ferner Folgendes umfasst:
ein Vergleichsmodul (404), das zum Bestimmen, durch einen Vergleich, ob der aktuelle Mobilnetz-Standortidentifikator und ein zuvor gespeicherter Mobilnetz-Standortidentifikator der gleiche sind, konfiguriert ist; und
ein Auslösemodul (405), das, wenn ein Vergleichsergebnis des Vergleichsmoduls (404) derart ist, dass die beiden nicht gleich sind, zum Auslösen des Bestimmungsmoduls (402) zum Bestimmen, ob der aktuelle Mobilnetz-Standortidentifikator in der Wi-Fi-Zugriffsstandortliste gespeichert ist, konfiguriert ist.

6. Endgerät nach Anspruch 5, wobei der Mobilnetz-Standortidentifikator spezifisch Folgendes ist: ein Zellenidentifikator eines Mobilnetzes; und
das Standortidentifikator-Erhaltmodul (401) spezifisch zum Erhalten, gemäß einer Zellübertragungsnachricht, die durch ein Mobilnetz bereitgestellt wird, eines Zellenidentifikators des Mobilnetzes, in welchem sich das Endgerät befindet, konfiguriert ist.

7. Endgerät nach Anspruch 6, wobei die Wi-Fi-Zugriffsstandortliste ferner verwendet wird, um einen Wi-Fi-Service-Set-Identifikator zu speichern, der einem Zugriffspunkt in einer Region entspricht, die durch den Zellenidentifikator des Mobilnetzes angegeben wird; und
das Ausführungsmodul (403), wenn bestimmt wird, dass der aktuelle Mobilnetz-Standortidentifikator des Endgerätes in der Wi-Fi-Zugriffsstandortliste gespeichert ist, spezifisch zum Starten eines Wi-Fi-Verbindungsprozesses gemäß dem Wi-Fi-Service-Set-Identifikator, der dem Zugriffspunkt entspricht, konfiguriert ist.

## Revendications

1. Procédé permettant d'accéder automatiquement à un réseau Wifi, comprenant les étapes consistant à :
obtenir (S201), grâce à un terminal, un identifiant de localisation de réseau mobile actuel du terminal ;
déterminer (S202), grâce au terminal, si l'identifiant de localisation de réseau mobile actuel du terminal est stocké dans une liste de localisation d'accès Wifi, dans lequel la liste de localisation d'accès Wifi est utilisée pour stocker un identifiant associé correspondant à une région qui fournit un accès de signal sans fil Wifi ;
**caractérisé en ce que** l'identifiant associé comprend des identifiants de localisation de réseau mobile du terminal et les SSID Wifi correspondants, lorsque le terminal détermine que l'identifiant de localisation de réseau mobile actuel du terminal est stocké dans la liste de localisation d'accès Wifi, permettant à un module d'accès Wifi d'être dans un état activé, et démarrant un processus de connexion de réseau Wifi (S203) en fonction d'un SSID Wifi correspondant à l'identifiant de localisation de réseau mobile du terminal seulement après qu'un écran du terminal est allumé ou qu'un service de données est demandé par un utilisateur.

2. Procédé selon la revendication 1, dans lequel après l'obtention, grâce au terminal, de l'identifiant de localisation de réseau mobile actuel du terminal, le procédé consiste en outre à :
déterminer, grâce au terminal par le biais d'une comparaison, si l'identifiant de localisation de réseau mobile actuel et un identifiant de localisation de réseau mobile stocké précédemment sont les mêmes ; et
la détermination, grâce au terminal, que l'identifiant de localisation de réseau mobile actuel du terminal est stocké ou non dans la liste de localisation d'accès Wifi comprend spécifiquement :
lorsqu'un résultat de comparaison de l'identifiant de localisation de réseau mobile actuel et de l'identifiant de localisation de réseau mobile stocké précédemment est négatif, déterminer, grâce au terminal, si l'identifiant de localisation de réseau mobile actuel est stocké dans la liste de localisation d'accès Wifi.

3. Procédé selon la revendication 1 ou 2, dans lequel l'identifiant de localisation de réseau mobile est spécifiquement : un identifiant de cellule d'un réseau mobile ; et l'obtention, grâce au terminal, de l'identifiant de localisation de réseau mobile actuel du terminal consiste spécifiquement à :
obtenir, grâce au terminal en fonction d'un message de diffusion de cellule distribué par un réseau mobile, un identifiant de cellule du réseau mobile où le terminal est situé.

4. Terminal permettant d'accéder automatiquement à un réseau Wifi, comprenant :
un module d'obtention d'identifiant de localisation (401), configuré pour obtenir un identifiant de localisation de réseau mobile actuel du terminal ;
un module de détermination (402), configuré pour déterminer si l'identifiant de localisation de réseau mobile actuel du terminal est stocké dans une liste de localisation d'accès Wifi, dans lequel la liste de localisation d'accès Wifi est utilisée pour stocker un identifiant associé correspondant à une région qui fournit un accès de signal sans fil Wifi ;
**caractérisé en ce que** l'identifiant associé comprend des identifiants de localisation de réseau mobile du terminal et les SSID Wifi correspondants, et le terminal comprend en outre un module d'exécution (403), configuré pour, lorsque le module de détermination (402) détermine que l'identifiant de localisation de réseau mobile actuel du terminal est stocké dans la liste de localisation d'accès Wifi, permettre à un module d'accès Wifi d'être dans un état activé, et démarrer un processus de connexion de réseau Wifi en fonction d'un SSID Wifi correspondant à l'identifiant de localisation de réseau mobile du terminal seulement après qu'un écran du terminal est allumé ou qu'un service de données est demandé par un utilisateur.

5. Terminal selon la revendication 4, comprenant en outre :
un module de comparaison (404), configuré pour déterminer, grâce à une comparaison, si l'identifiant de localisation de réseau mobile actuel et un identifiant de localisation de réseau mobile stocké précédemment sont les mêmes ; et
un module de déclenchement (405), configuré pour, lorsqu'un résultat de comparaison du module de comparaison (404) est que les deux ne sont pas les mêmes, déclencher le module de détermination (402) pour déterminer si l'identifiant de localisation de réseau mobile actuel est stocké dans la liste de localisation d'accès Wifi.

6. Terminal selon la revendication 5, dans lequel l'identifiant de localisation de réseau mobile est spécifiquement : un identifiant de cellule d'un réseau mobile ; et
le module d'obtention d'identifiant de localisation (401) est spécifiquement configuré pour obtenir, en fonction d'un message de diffusion de cellule distribué par un réseau mobile, un identifiant de cellule du réseau mobile où le terminal est situé.

7. Terminal selon la revendication 6, dans lequel la liste de localisation d'accès Wifi est utilisée en outre pour stocker un identifiant de l'ensemble de services Wifi correspondant à un point d'accès dans une région qui est indiqué par l'identifiant de cellule du réseau mobile ; et
le module d'exécution (403) est configuré spécifiquement pour, lorsqu'on détermine que l'identifiant de localisation de réseau mobile actuel du terminal est stocké dans la liste de localisation d'accès Wifi, démarrer un processus de connexion Wifi en fonction de l'identifiant de l'ensemble de services Wifi qui correspond au point d'accès.
